Europäisches Patentamt

European Patent Office

Office européen des brevets

(11) Numéro de publication : **0 434 577 A1**

(12) # DEMANDE DE BREVET EUROPEEN

(21) Numéro de dépôt : **90420544.0**

(22) Date de dépôt : **13.12.90**

(51) Int. Cl.[5] : **F01N 7/08**, F01N 1/08,
F01N 7/20

(30) Priorité : **20.12.89 FR 8917205**

(43) Date de publication de la demande :
**26.06.91 Bulletin 91/26**

(84) Etats contractants désignés :
**AT DE ES FR GB IT**

(71) Demandeur : **DEVIL (Société anonyme)**
**115, avenue de la Plaine**
**F-74130 Marignier (FR)**

(72) Inventeur : **Deville, Paul**
**Hameau du Vignoble**
**F-74130 Ayze (FR)**

(74) Mandataire : **de Beaumont, Michel**
**Cabinet Poncet 7, chemin de Tillier B.P. 317**
**F-74008 Annecy RP Cédex (FR)**

(54) Sortie d'échappement a épurateur.

(57) La sortie selon l'invention se caractérise par la présence d'une chambre intermédiaire de détente (4) située entre un tube collecteur (3) et un tube de sortie (5). La chambre intermédiaire (4) comprend une première portion (6) à parois divergentes et une seconde portion (7) à parois convergentes. Un orifice d'évacuation (9) est ménagé dans la zone centrale (8) de chambre de détente. La chambre de détente (4) capte les particules amenées par les gaz, et les évacue par l'orifice d'évacuation (9).

FIG. 1

EP 0 434 577 A1

# SORTIE D'ECHAPPEMENT A EPURATEUR

La présente invention concerne les sorties d'échappement destinées à former la zone d'extrémité d'une ligne d'échappement de moteur à combustion interne.

Les sorties d'échappement sont généralement destinées à être raccordées en sortie d'une canalisation de conduction de gaz d'échappement, par exemple la sortie d'un silencieux, et elles comprennent un orifice d'entrée muni de moyens de raccordement à ladite canalisation de conduction de gaz d'échappement, et un orifice de sortie ouvert à l'air libre pour la sortie des gaz, des moyens de conduction des gaz assurant le passage des gaz depuis l'orifice d'entrée jusqu'à l'orifice de sortie.

Dans leur forme la plus dépouillée, les sorties d'échappement sont formées d'un simple tube.

Une forme ancienne mais plus élaborée de sortie d'échappement est décrite dans le document FR-A-606 040. Elle comprend un tuyau à plusieurs évasements successifs entouré d'une enveloppe externe. Chaque évasement est percé dans sa partie supérieure pour permettre le passage des gaz d'échappement dans l'intervalle entre le tuyau et l'enveloppe externe. Dans cet intervalle, les gaz suivent un mouvement en spirale et sortent par des ouvertures inférieures de l'enveloppe, dirigées vers le sol. Le bruit d'échappement est atténué ; des condensats se forment dans l'intervalle entre le tuyau et l'enveloppe, et sont évacués par les ouvertures inférieures avec les gaz.

Les sorties d'échappement sont soumises à des contraintes et des agressions chimiques et physiques telles que l'humidité ambiante, la chaleur des gaz d'échappement, les particules liquides ou solides entraînées par les gaz d'échappement. Il en résulte un risque de corrosion assez rapide des sorties d'échappement. Ce risque est d'autant plus grand dans le cas d'une structure telle que décrite dans le document FR-A-606 040, car la corrosion se développe au voisinage de chaque ouverture inférieure et dans l'intervalle parcouru par les gaz.

On a tenté de réduire cette corrosion en prévoyant des sorties d'échappement réalisées en un matériau anticorrosion tel que l'acier inoxydable. Une sortie d'échappement réalisée en un tel matériau présente, lorsqu'elle est neuve, un aspect brillant agréable à l'oeil. Toutefois, en cours d'usage, l'aspect se dégrade rapidement par le fait que des particules amenées par les gaz d'échappement se déposent sur la sortie d'échappement, au voisinage de son orifice de sortie. En outre, les liquides de condensation qui se forment inévitablement dans la sortie d'échappement tendent à s'égoutter vers l'extérieur par l'orifice de sortie, et accentuent les défauts de propreté extérieure de la sortie d'échappement.

La présente invention a notamment pour objet d'éviter les inconvénients des structures connues des sorties d'échappement, en proposant une nouvelle structure permettant de réduire très sensiblement les dépôts de particules solides au voisinage de l'orifice de sortie. L'invention permet en outre d'éviter que les particules liquides amenées par les gaz d'échappement s'égouttent par l'orifice de sortie.

Une réalisation particulière de la présente invention permet d'obtenir l'effet ci-dessus en conservant les qualités aérauliques internes de la sortie d'échappement, c'est-à-dire sans perturber la puissance développée par le moteur à combustion interne auquel est raccordée la sortie d'échappement.

Un autre avantage de l'invention est de modifier légèrement la sonorité de la sortie d'échappement, en produisant une sonorité légèrement plus grave par élimination de certaines composantes hautes fréquences.

Selon un mode de réalisation particulier, l'invention permet en outre de diminuer le bruit de ravalement de la sortie d'échappement, bruit qui se produit au moment où l'on réduit les gaz du moteur à combustion interne auquel est raccordée la sortie d'échappement.

Pour atteindre ces objets ainsi que d'autres, la sortie d'échappement selon l'invention comprend :
- un tube collecteur conduisant les gaz d'échappement depuis l'orifice d'entrée jusqu'à une chambre intermédiaire de détente,
- un tube de sortie conduisant les gaz d'échappement depuis la chambre intermédiaire de détente jusqu'à l'orifice de sortie,
- ladite chambre intermédiaire comprenant une première partie à parois divergentes adjacente à la jonction avec le tube collecteur, se raccordant par une zone centrale à une seconde partie à parois convergentes adjacente à la jonction avec le tube de sortie,
- au moins un orifice d'évacuation de poussières et de liquides ménagé dans la partie inférieure de la zone centrale de paroi de chambre intermédiaire de détente.

De préférence, le tube collecteur présente une section plus petite que la section du tube de sortie, et les parois de première portion de chambre intermédiaire de détente se raccordent aux parois de seconde portion selon un arrondi.

L'effet de la chambre de détente munie d'un orifice d'évacuation est de capter les particules solides et liquides en suspension qui sont amenées par les gaz d'échappement, ces particules étant avantageusement évacuées par l'orifice d'évacuation de poussières et de liquides. De cette manière, la sortie d'échappement conserve au maximum sa propreté au voisinage de l'orifice de sortie.

Selon un mode de réalisation avantageux, le tube de sortie comprend des lumières réparties dans le pourtour de sa paroi, et une entrée d'air est prévue pour l'admission d'air extérieur à travers les lumières en direction de l'intérieur du tube de sortie. L'air réaspiré par les lumières est recirculé et dilue les gaz d'échappement. En outre, cette circulation d'air frais améliore l'écoulement des gaz, et produit une couche périphérique d'air frais, au niveau de l'orifice de sortie, qui protège la zone de l'orifice de sortie par rapport aux gaz chauds et pollués.

Selon un mode de réalisation particulier, le tube collecteur comprend une zone de rétrécissement en forme de Venturi, limitée par des parois convergentes à angle ouvert se raccordant à des parois divergentes à angle plus réduit. Cette disposition réduit très sensiblement le bruit de ravalement.

D'autres objets, caractéristiques et avantages de la présente invention ressortiront de la description suivante de modes de réalisation particuliers, faite en relation avec les figures jointes, parmi lesquelles :

- la figure 1 est une coupe longitudinale d'une sortie d'échappement selon un premier mode de réalisation de la présente invention ; et
- la figure 2 est une coupe longitudinale d'une sortie d'échappement selon un second mode de réalisation de la présente invention.

Comme le représentent les figures, la sortie d'échappement selon l'invention comprend un orifice d'entrée 1 conformé pour son raccordement à une canalisation de conduction de gaz d'échappement non représentée sur les figures, et un orifice de sortie 2 ouvert à l'air libre pour la sortie des gaz. La sortie d'échappement conduit les gaz depuis l'orifice d'entrée 1 jusqu'à l'orifice de sortie 2.

Pour la commodité du dessin, on a représenté cette sortie d'échappement selon un axe longitudinal I-I dans le sens vertical. Naturellement, en position d'utilisation, cette sortie d'échappement est destinée à être utilisée de préférence en position horizontale, c'est-à-dire avec son axe longitudinal I-I disposé horizontalement ou selon une faible inclinaison par rapport à l'horizontale.

La sortie d'échappement comprend un tube collecteur 3 conduisant les gaz d'échappement depuis l'orifice d'entrée 1 jusqu'à une chambre intermédiaire de détente 4. Un tube de sortie 5 conduit les gaz d'échappement depuis la chambre intermédiaire de détente 4 jusqu'à l'orifice de sortie 2. La chambre intermédiaire de détente 4 comprend une première portion 6 à parois divergentes dans le sens d'écoulement des gaz d'échappement, adjacente à la jonction avec le tube collecteur 3, et comprend une seconde portion 7 à parois convergentes dans le sens d'écoulement des gaz d'échappement, adjacente à la jonction avec le tube de sortie 5.

Les parois divergentes de première portion 6 forment sensiblement un cône dont l'angle au sommet peut avantageusement être compris entre 70 et 100 degrés, par exemple voisin de 90 degrés. Il en est de même des parois convergentes de seconde portion 7 de chambre de détente.

De bons résultats ont été obtenus en prévoyant une chambre de détente 4 dont la section maximale, dans la zone de raccordement entre la première portion 6 et la seconde portion 7, est au moins 50% plus grande que la section du tube collecteur 3.

Dans le mode de réalisation représenté sur les figures, le tube collecteur 3 présente avantageusement une section plus petite que la section du tube de sortie 5.

Les parois de première portion 6 de chambre intermédiaire de détente se raccordent avantageusement aux parois de seconde portion 7 selon une zone centrale 8 de paroi de chambre intermédiaire de détente présentant un profil arrondi.

La zone centrale 8 de paroi de chambre intermédiaire de détente comprend avantageusement au moins un orifice d'évacuation 9, dans sa partie inférieure, pour l'évacuation des poussières et des liquides amenés par les gaz d'échappement dans le tube collecteur 3 et piégés dans la chambre de détente 4. On désigne par "partie inférieure" de zone centrale 8 la portion périphérique de zone centrale destinée à être orientée vers le bas lorsque la sortie d'échappement est en position d'utilisation avec son axe longitudinal I-I sensiblement horizontal.

L'orifice 9 n'a pas pour objet de laisser partir latéralement les gaz d'échappement. Ceux-ci doivent sortir par le tube de sortie 5. L'orifice 9 doit cependant permettre l'évacuation des condensats liquides ou solides apparaissant dans la chambre intermédiaire de détente 4. De bons résultats sont obtenus en utilisant un orifice 9 dont le diamètre est compris entre 6 et 10 millimètres environ, de préférence 8 millimètres environ pour un diamètre de tube collecteur habituel de 40 à 50 millimètres environ.

L'orifice d'évacuation 9 peut être centré sur la zone centrale 8, comme le représentent les figures. Toutefois, l'orifice d'évacuation 9 peut avantageusement être légèrement déporté vers l'aval de la zone centrale, de façon que son bord amont soit au milieu de la zone centrale, dans la partie la plus large de chambre de détente.

Le tube de sortie 5 est sensiblement cylindrique et se termine par un rebord 10 arrondi retourné vers l'extérieur. Le tube de sortie 5 comprend des lumières 11 réparties sur le pourtour de sa paroi, par exemple des lumières oblongues inclinées par rapport à l'axe longitudinal I-I.

Une enveloppe extérieure 12 recouvre la totalité des faces latérales du tube collecteur 3, de la chambre intermédiaire de détente 4 et du tube de sortie 5, comme le représentent les figures. Dans la zone de l'orifice d'entrée 1, l'enveloppe extérieure 12 se raccorde au tube collecteur 3. Par contre, dans la zone de l'orifice de sortie 2, la périphérie du rebord 10 de tube de sortie 5, formant l'orifice de sortie 2, est non jointive avec le bord extrême 13 de l'enveloppe extérieure 12, définissant un passage annulaire 14 d'entrée d'air.

La paroi inférieure de l'enveloppe extérieure 12 peut avantageusement être divergente, ou inclinée vers le bas, pour faciliter l'évacuation des poussières et liquides provenant de la chambre intermédiaire de détente 4 et s'évacuant par l'orifice d'évacuation 9.

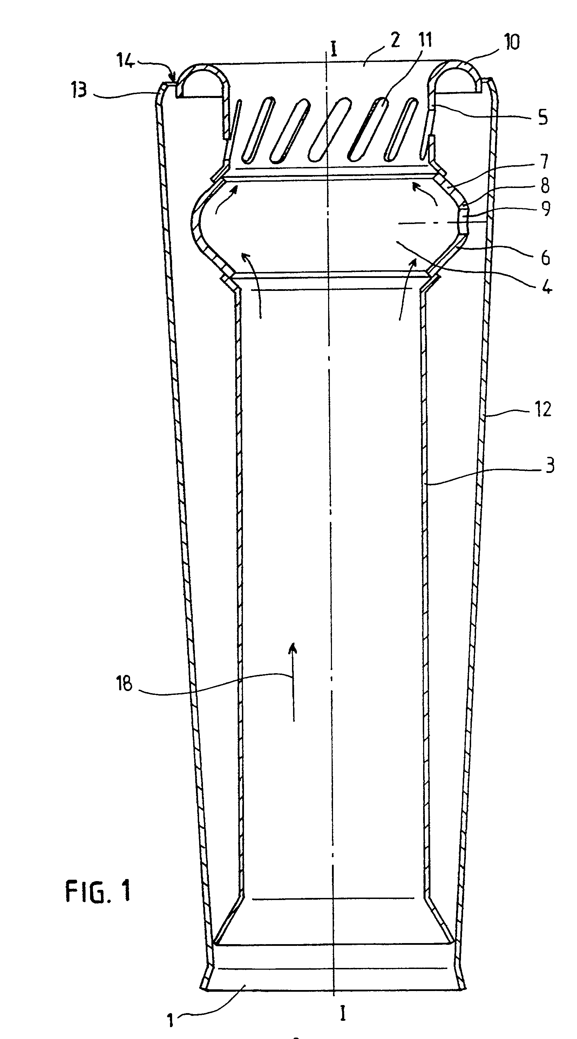

Dans le mode de réalisation de la figure 1, le tube collecteur 3 est cylindrique.

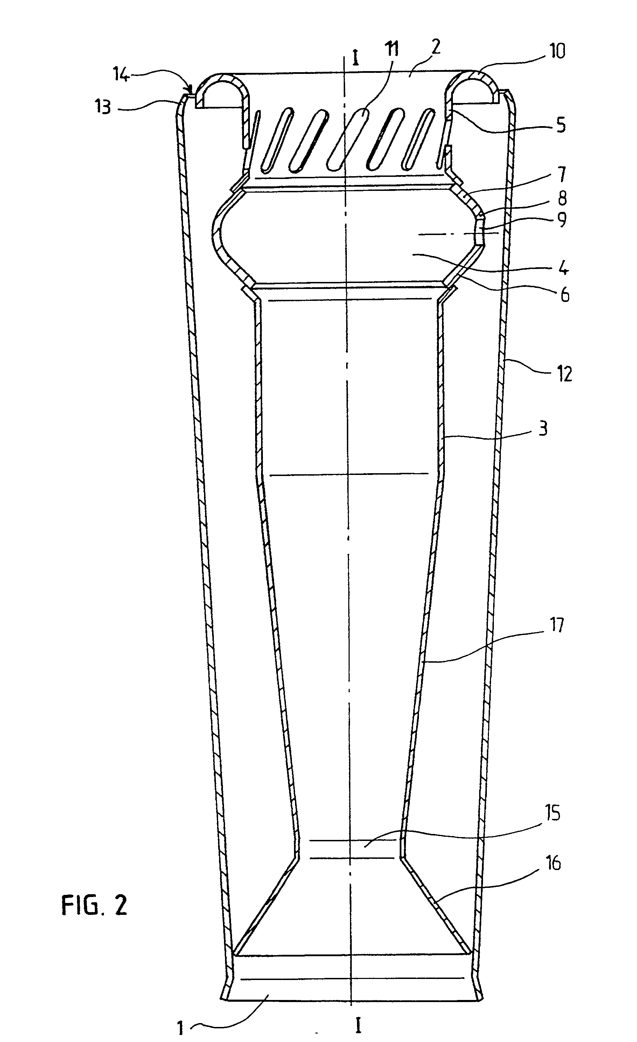

Par contre, dans le mode de réalisation de la figure 2, le tube collecteur 3 comprend une zone de rétrécissement 15 en forme de Venturi, limitée par des parois amont 16 convergentes à angle ouvert se raccordant à des parois aval 17 divergentes à angle plus réduit, comme le représentent les figures, selon les angles habituellement utilisés pour les Venturi destinés à un écoulement de fluides gazeux.

Selon un mode de réalisation, les différentes parties tubulaires de la sortie d'échappement peuvent être cylindriques ou côniques de révolution, c'est-à-dire présenter une section transversale circulaire.

En alternative, les différentes parties tubulaires peuvent présenter une section transversale ovale, polygonale ou autre.

L'enveloppe 12 extérieure peut avoir une forme cylindrique, ou une forme cônique.

Le fonctionnement de la sortie d'échappement selon l'invention est le suivant : les gaz d'échappement introduits par l'orifice d'entrée 1 s'écoulent dans le tube collecteur 3, comme le représente la flèche 18. Dans la chambre de détente 4, la première portion 6 de chambre de détente se trouve fortement en dépression par rapport au reste de la chambre, et piège les particules en suspension dans les gaz d'échappement. Ces particules se déposent dans la partie basse de la chambre de détente 4, et sont évacuées par gravité par l'orifice d'évacuation inférieur 9.

Du fait de la diminution de section du tube de sortie 5 par rapport à la section de la chambre de détente 4, la première portion de tube de sortie 5 se trouve en légère dépression, et de l'air est aspiré de l'extérieur par les lumières 11 et le passsage annulaire 14 d'entrée d'air. L'air aspiré pénétrant par les lumières 11 dilue les gaz d'échappement. Cette circulation d'air améliore l'écoulement des gaz et réalise une couche périphérique d'air qui protège le rebord 10 des dépôts de particules solides ou liquides encore en suspension dans les gaz d'échappement. Cette circulation d'air améliore en outre le comportement aéraulique de la sortie d'échappement, et évite de perturber la puissance du moteur à combustion interne malgré la présence de la chambre de détente 4.

L'enveloppe extérieure 12 assure la protection du tube collecteur 3, de la chambre de détente 4 et du tube de sortie 5. Sa fonction est également de créer un volume autour des parties centrales de la sortie d'échappement, volume qui donne une sonorité plus grave caractéristique de l'échappement, par élimination de certaines composantes hautes fréquences.

Dans le mode de réalisation de la figure 2, la zone de rétrécissement 15 de type Venturi a pour effet de réduire sensiblement le bruit de ravalement, c'est-à-dire le bruit apparaissant au niveau de la sortie d'échappement lorsque l'on réduit très sensiblement les gaz du moteur à combustion interne auquel est raccordé l'échappement. Cet effet de diminution sensible du bruit de ravalement est vraisemblablement dû au fait que la zone de rétrécissement 15 constitue un obstacle pour les ondes acoustiques provenant de l'orifice de sortie 2 et se propageant vers l'orifice d'entrée 1, et constitue également un obstacle pour les ondes acoustiques provenant de la canalisation d'échappement et se dirigeant vers l'orifice d'entrée 1. Tout ce passe comme si l'on réduisait ainsi le volume de la colonne gazeuse située depuis l'orifice de sortie 2 en direction du silencieux de sortie. Cette réduction de volume fait disparaître certaines fréquences de résonance basses correspondant au bruit de ravalement.

La présente invention n'est pas limitée aux modes de réalisation qui ont été explicitement décrits, mais elle en inclut les diverses variantes et généralisations contenues dans le domaine des revendications ci-après.

**Revendications**

1.  Sortie d'échappement, destinée à former la zone d'extrémité d'une ligne d'échappement de moteur à combustion interne, comprenant :
    - un orifice d'entrée (1) muni de moyens de raccordement à une canalisation de conduction de gaz d'échappement,
    - un orifice de sortie (2) ouvert à l'air libre pour la sortie des gaz,
    - un tube collecteur (3) conduisant les gaz d'échappement depuis l'orifice d'entrée (1) jusqu'à une chambre intermédiaire de détente (4),
    - un tube de sortie (5) conduisant des gaz d'échappement jusqu'à l'orifice de sortie (2),
    - ladite chambre intermédiaire de détente (4), qui comprend une première portion (6) à parois divergentes adjacente à la jonction avec le tube collecteur (3) et se raccordant par une zone centrale (8) à une seconde portion (7) à parois convergentes,
    caractérisée en ce que :
    - la zone centrale (8) de paroi de chambre intermédiaire de détente (4) comprend au moins un orifice d'évacuation (9) de poussières et de liquides dans sa partie inférieure,
- le tube de sortie (5) est adjacent aux parois convergentes (7) de la chambre intermédiaire de détente (4), et conduit les gaz d'échappement depuis la chambre intermédiaire de détente (4) jusqu'à l'orifice de sortie (2).

2. Sortie d'échappement selon la revendication 1, caractérisée en ce que l'orifice d'évacuation (9) a un diamètre compris entre 6 et 10 millimètres environ.

3. Sortie d'échappement selon l'une des revendications 1 ou 2, caractérisée en ce que :
- les parois divergentes de première portion (6) de chambre intermédiaire de détente forment un cône dont l'angle au sommet est compris entre 70 et 100 degrés,
- les parois convergentes de seconde portion (7) de chambre intermédiaire de détente forment un cône dont l'angle au sommet est compris entre 70 et 100 degrés.

4. Sortie d'échappement selon l'une quelconque des revendications 1 à 3, caractérisée en ce que le tube collecteur (3) présente une section plus petite que la section du tube de sortie (5).

5. Sortie d'échappement selon la revendication 4, caractérisée en ce que la section maximale de chambre de détente (4) est au moins 50% plus grande que la section du tube collecteur (3).

6. Sortie d'échappement selon l'une quelconque des revendications 1 à 5, caractérisée en ce que les parois de première portion de chambre (6) intermédiaire de détente se raccordent aux parois de seconde portion (7) de chambre intermédiaire de détente selon une zone centrale (8) à profil arrondi.

7. Sortie d'échappement selon l'une quelconque des revendications 1 à 6, caractérisée en ce que le tube de sortie (5) est sensiblement cylindrique et se termine par un rebord (10) arrondi retourné vers l'extérieur.

8. Sortie d'échappement selon l'une quelconque des revendications 1 à 7, caractérisée en ce que le tube de sortie (5) comprend des lumières (11) réparties dans le pourtour de sa paroi, associées à une entrée d'air pour l'admission d'air extérieur à travers les lumières (11) vers l'intérieur du tube de sortie.

9. Sortie d'échappement selon l'une quelconque des revendications 1 à 8, caractérisée en ce qu'elle comprend une enveloppe extérieure (12) recouvrant en totalité les faces latérales du tube collecteur (3), de la chambre intermédiaire de détente (4) et du tube de sortie (5).

10. Sortie d'échappement selon la revendication 9, caractérisée en ce que la périphérie du rebord de sortie (10) formant l'orifice de sortie (2) est non jointive avec le bord extrême (13) de l'enveloppe extérieure (12), définissant un passage annulaire (14) d'entrée d'air.

11. Sortie d'échappement selon l'une des revendications 9 ou 10, caractérisée en ce que la paroi inférieure de l'enveloppe extérieure (12) est divergente, pour faciliter l'évacuation des poussières et liquides provenant de la chambre intermédiaire de détente (4) et traversant l'orifice d'évacuation (9).

12. Sortie d'échappement selon l'une quelconque des revendications 1 à 11, caractérisée en ce que le tube collecteur (3) est cylindrique.

13. Sortie d'échappement selon l'une quelconque des revendications 1 à 11, caractérisée en ce que le tube collecteur (3) comprend une zone de rétrécissement (15) en forme de Venturi, limitée par des parois amont (16) convergentes à angle ouvert se raccordant à des parois aval (17) divergentes à angle plus réduit.

FIG. 1

FIG. 2

EP 0 434 577 A1

7

Office européen
des brevets

**RAPPORT DE RECHERCHE EUROPEENNE**

Numero de la demande

EP    90 42 0544

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A, D | FR-A-606040 (BRUN-SCHELLER) <br> * le document en entier * <br> --- | 1-3, <br> 5-9, 12 | F01N7/08 <br> F01N1/08 <br> F01N7/20 |
| A | CH-A-362572 (ADOLPH SAURER) <br> * figure 1 * <br> --- | 1, 6 | |
| A | US-A-4690245 (GREGORICH) <br> * abrégé; figure 10a * <br> --- | 1, 13 | |
| A | WO-A-8905394 (CATERPILLAR) <br> * abrégé; figure 2 * <br> --- | 1, 13 | |
| A | GB-A-684987 (JOHN EDWARD SLACK) <br> --- | | |
| A | FR-A-1052611 (SOCIETE C.M.) <br> ----- | | |

**DOMAINES TECHNIQUES RECHERCHES (Int. Cl.5)**

F01N

Le présent rapport a été établi pour toutes les revendications

| Lieu de la recherche | Date d'achèvement de la recherche | Examinateur |
|---|---|---|
| LA HAYE | 14 FEVRIER 1991 | ERNST J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)